# EUROPEAN PATENT APPLICATION

(11) **EP 4 807 861 A1**
(43) Date of publication of application: **16.09.2026**
(21) Application number: 24912408.2
(22) Date of filing: 12.12.2024
(51) Int. Cl.: H01M 10/6568, H01M 10/613, H01M 10/617, H01M 10/625, H01M 10/6556

(54) **COOLING HEAT EXCHANGER**

(30) Priority: 26.12.2023 JP 2023219773
(71) Applicant: Sumitomo Riko Company Limited, Komaki-shi, Aichi 485-8550 (JP)
(72) Inventor: WAKAZONO, Yukinori, Komaki-shi, Aichi 485-8550 (JP); YUZURIHA, Chiaki, Komaki-shi, Aichi 485-8550 (JP); YAMADA, Hiroshi, Komaki-shi, Aichi 485-8550 (JP); HASHIMOTO, Koji, Komaki-shi, Aichi 485-8550 (JP); KANEGAE, Ryousuke, Komaki-shi, Aichi 485-8550 (JP)
(74) Representative: SSM Sandmair
(86) International application number: PCT/JP2024/044007
(87) International publication number: WO 2025/142519

(57) **Abstract**

A cooling heat exchanger 10 cools a cooling target B superposed on its surface by allowing a cooling heat medium to flow through an internally formed cooling flow path 38. The cooling flow path 38 includes a supply flow path 40 to which the heat medium is supplied from an upstream side, and a discharge flow path 42 from which the heat medium is discharged from a downstream side. In the cooling flow path 38, multiple branch flow paths 44a to 44h connecting the supply flow path 40 and the discharge flow path 42 are provided in parallel, branching from multiple positions in a length direction of the supply flow path 40. The branch flow paths 44a to 44h partly include resistance regulating parts 46a to 46h for regulating the flow resistance of the heat medium, the flow resistance of the heat medium in the resistance regulating parts 46 becoming smaller in the branch flow path 44 branching on a more downstream side of the supply flow path 40.

## Description

### TECHNICAL FIELD

The present invention relates to a cooling heat exchanger to be used for cooling a cooling target that is a battery pack and the like in a motorized vehicle such as an electric car.

### BACKGROUND ART

In a motorized vehicle such as an electric car or a hybrid car, a battery pack or an electronic device as a cooling target generates a large amount of heat as a result of size reduction or higher performance thereof, thereby increasing importance of cooling performance. As disclosed in International Publication No. WO 2019/008000 (Patent Document 1), for example, a cooling heat exchanger conventionally employed has a configuration where a cooling flow path is formed between plates superposed on each other. In this cooling heat exchanger, one of the plates is superposed on a cooling target such as a battery pack, and this one plate is cooled with a cooling medium flowing in the cooling flow path to cool the cooling target.

### BACKGROUND ART DOCUMENT

### PATENT DOCUMENT

Patent Document 1: WO 2019/008000

### SUMMARY OF THE INVENTION

### PROBLEM THE INVENTION ATTEMPTS TO SOLVE

In the cooling heat exchanger of Patent Document 1, the cooling flow path has a configuration where a supply flow path located on an upstream side and to be supplied with a heat medium and a discharge flow path located on a downstream side and from which the heat medium is to be discharged are connected to each other via a plurality of branch flow paths arranged in parallel. These branch flow paths have shapes and sizes substantially equal to each other.

In such a configuration of Patent Document 1, however, a difference in flow rate resulting from pressure loss or the like is likely to occur between a branch flow path branching on an upstream side of the supply flow path and a branch flow path branching on a downstream side of the supply flow path, often leading to non-uniformity in cooling efficiency.

A problem to be solved by the present invention is to provide a cooling heat exchanger having a novel structure capable of fulfilling stable cooling performance over a wide range of a cooling surface to contact a cooling target.

### MEANS FOR SOLVING THE PROBLEM

Hereinafter, preferred embodiments for grasping the present invention will be described. However, all the preferred embodiments described below are exemplary and can be appropriately combined with each other. Besides, a plurality of elements described in each preferred embodiment can be recognized and adopted as independently as possible, or can also be appropriately combined with any element described in other preferred embodiments. By so doing, in the present invention, various other preferred embodiments can be realized without being limited to those described below.

A first preferred embodiment provides a cooling heat exchanger comprising a cooling flow path formed inside, the cooling heat exchanger cooling a cooling target superposed on a surface of the cooling heat exchanger by causing a heat medium for cooling to flow in the cooling flow path, wherein the cooling flow path comprises: a supply flow path configured to allow the heat medium to be supplied from an upstream side; a discharge flow path configured to allow the heat medium to be discharged from a downstream side; and a plurality of branch flow paths connecting the supply flow path and the discharge flow path to each other, the plurality of branch flow paths branching from the supply flow path at a plurality of positions of the supply flow path in a flow path length direction while being provided in parallel, the plurality of branch flow paths include respective resistance regulating parts provided partially for regulating respective flow resistances of the heat medium, and the respective flow resistances of the heat medium in the resistance regulating parts are set in such a way that the flow resistance becomes smaller in the branch flow path branching on a more downstream side of the supply flow path.

According to the cooling heat exchanger structured following the present preferred embodiment, a difference in flow rate of the heat medium between the plurality of branch flow paths is reduced, making it possible to reduce non-uniformity in cooling efficiency between the branch flow paths. As a result, it is possible to achieve stable cooling performance over a wider cooling region using the plurality of branch flow paths. Furthermore, as the resistance regulating part is provided partially at the branch flow path, the branch flow path can be designed with a high degree of freedom in a part other than the resistance regulating part.

A second preferred embodiment provides the cooling heat exchanger according to the first preferred embodiment, wherein at least one of the plurality of branch flow paths extends in a planar double helix pattern from a center toward an outer periphery, and two ends of the branch flow path located at the outer periphery are respectively connected to one and an other of the supply flow path and the discharge flow path.

According to the cooling heat exchanger structured following the present preferred embodiment, in the branch flow path having a planar double helix pattern, an upstream part where the heat medium at low temperature flows and a downstream part where the heat medium at high temperature flows are arranged alternately and next to each other. This generates heat exchange between the flow paths next to each other, thereby reducing a temperature difference between the upstream part and the downstream part in the branch flow path. This suppresses change in cooling efficiency in the length direction of the branch flow path, making it possible to achieve stable cooling performance over a wide range.

Compared to a linear branch flow path, the branch flow path having a pattern curved or bent in a peripheral direction facilitates stirring of the heat medium flowing in the flow path, making it possible to reduce a temperature difference between flow path sections.

A third preferred embodiment provides the cooling heat exchanger according to the first or second preferred embodiment, wherein respective parts of the plurality of branch flow paths other than the resistance regulating parts have flow path width dimensions equal to each other.

According to the cooling heat exchanger structured following the present preferred embodiment, by providing the partial resistance regulating part at the branch flow path, it becomes possible to regulate flow rates in the plurality of branch flow paths to encourage stabilization of cooling performance without forming respective parts of the plurality of branch flow paths other than the resistance regulating parts into flow path width dimensions differing from each other. Thus, in the respective parts of the plurality of branch flow paths other than the resistance regulating parts, uniformity is encouraged in terms of a range of a cooling surface to be cooled by each branch flow path, cooling efficiency and others, thereby encouraging further stabilization of cooling performance.

A fourth preferred embodiment provides the cooling heat exchanger according to the third preferred embodiment, wherein the respective parts of the plurality of branch flow paths other than the resistance regulating parts have flow path sectional areas equal to each other.

According to the cooling heat exchanger structured following the present preferred embodiment, the respective parts of the plurality of branch flow paths other than the resistance regulating parts have flow path sectional areas equal to each other. This encourages uniformity in flow rate and flow velocity, thereby further reducing non-uniformity in cooling performance between the branch flow paths.

A fifth preferred embodiment provides the cooling heat exchanger according to any one of the first to fourth preferred embodiments, wherein respective flow path sectional areas in the resistance regulating parts are set in such a way that the flow path sectional area becomes larger in the resistance regulating part of the branch flow path branching on the more downstream side of the supply flow path.

According to the cooling heat exchanger structured following the present preferred embodiment, it is possible to set respective flow resistances in the resistance regulating parts of the plurality of branch flow paths easily using the flow path sectional area in the resistance regulating part.

A sixth preferred embodiment provides the cooling heat exchanger according to any one of the first to fifth preferred embodiments, wherein each resistance regulating part is provided at an end of the corresponding branch flow path.

According to the cooling heat exchanger structured following the present preferred embodiment, the resistance regulating part is provided at the end of the branch flow path. Thus, in a middle part of the branch flow path where heat is exchanged with the cooling surface superposed on the cooling target, a flow path sectional area is ensured without being reduced by the resistance regulating part, thereby preventing reduction in cooling efficiency.

A seventh preferred embodiment provides the cooling heat exchanger according to any one of the first to sixth preferred embodiments, further comprising: a flow path member provided with a recessed groove formed at a surface of the flow path member; and a cooling surface constituent member configured to be superposed on the cooling target, the flow path member and the cooling surface constituent member being superposed on each other, wherein the recessed groove of the flow path member is covered by the cooling surface constituent member to form the cooling flow path between superposed surfaces of the flow path member and the cooling surface constituent member.

The cooling heat exchanger structured following the present preferred embodiment has a stacked structure where the flow path member and the cooling surface constituent member are superposed on each other. Thus, by covering an opening of the recessed groove formed at the flow path member using the cooling surface constituent member, it becomes possible to easily form the cooling flow path between the superposed surfaces of the flow path member and the cooling surface constituent member.

An eighth preferred embodiment provides the cooling heat exchanger according to the seventh preferred embodiment, wherein the flow path member is made of synthetic resin, and the cooling surface constituent member is made of metal.

According to the cooling heat exchanger structured following the present preferred embodiment, by using synthetic resin for forming the flow path member provided with the recessed groove defining the cooling flow path, it becomes possible to form the recessed groove easily and further possible to encourage a higher degree of shape freedom or higher shape accuracy. Furthermore, by using metal for forming the cooling surface constituent member defining the cooling surface to be superposed on the cooling target, it becomes possible to form the cooling surface constituent member easily using a material with high heat conductivity, thereby encouraging improved efficiency in heat exchange between the cooling target and the heat medium via the cooling surface constituent member. Using metal for forming the cooling surface constituent member to contact the cooling target also facilitates ensuring of durability at a surface of contact with the cooling target. Moreover, using synthetic resin for forming the flow path member achieves weight reduction more easily than using metal.

### EFFECT OF THE INVENTION

According to the present invention, it is possible to fulfill more stable cooling performance at the cooling surface to contact the cooling target in the cooling heat exchanger.

### BRIEF DESCRIPTION OF THE DRAWINGS

FIG. 1 is a perspective view depicting a cooling heat exchanger according to a first practical embodiment of the present invention.
FIG. 2 is an exploded perspective view of the cooling heat exchanger depicted in FIG. 1.
FIG. 3 is a plan view of the cooling heat exchanger depicted in FIG. 1.
FIG. 4 is a sectional view of the cooling heat exchanger depicted in FIG. 1 and is a view corresponding to a section along 4-4 in FIG. 3.
FIG. 5 is a sectional view of the cooling heat exchanger depicted in FIG. 1 and is a view corresponding to a section along 5-5 in FIG. 3.
FIG. 6 is a sectional view of the cooling heat exchanger depicted in FIG. 1 and is a view corresponding to a section along 6-6 in FIG. 3.

### EMBODIMENTS FOR CARRYING OUT THE INVENTION

Hereinafter, a practical embodiment of the present invention will be described in reference to the drawings.

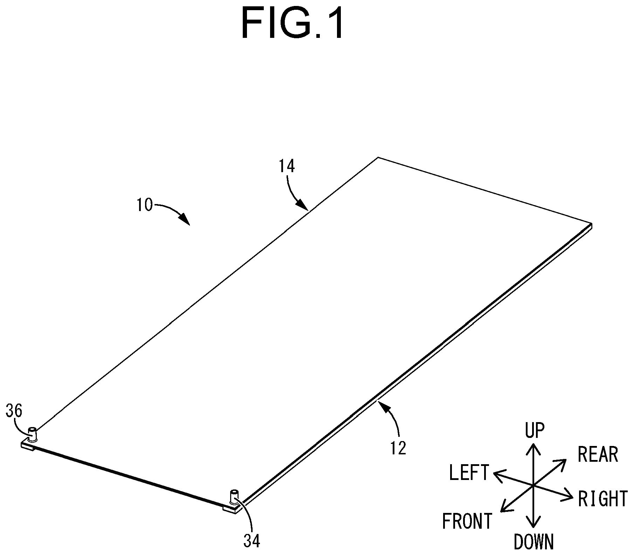

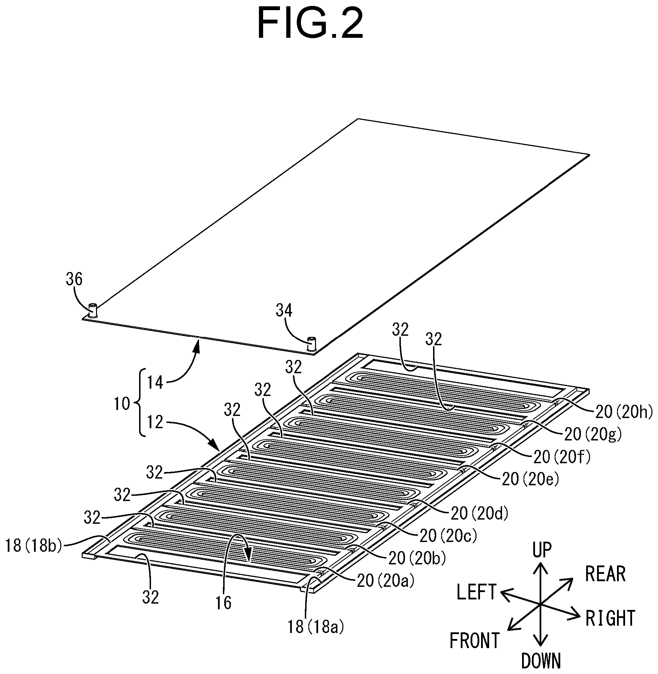

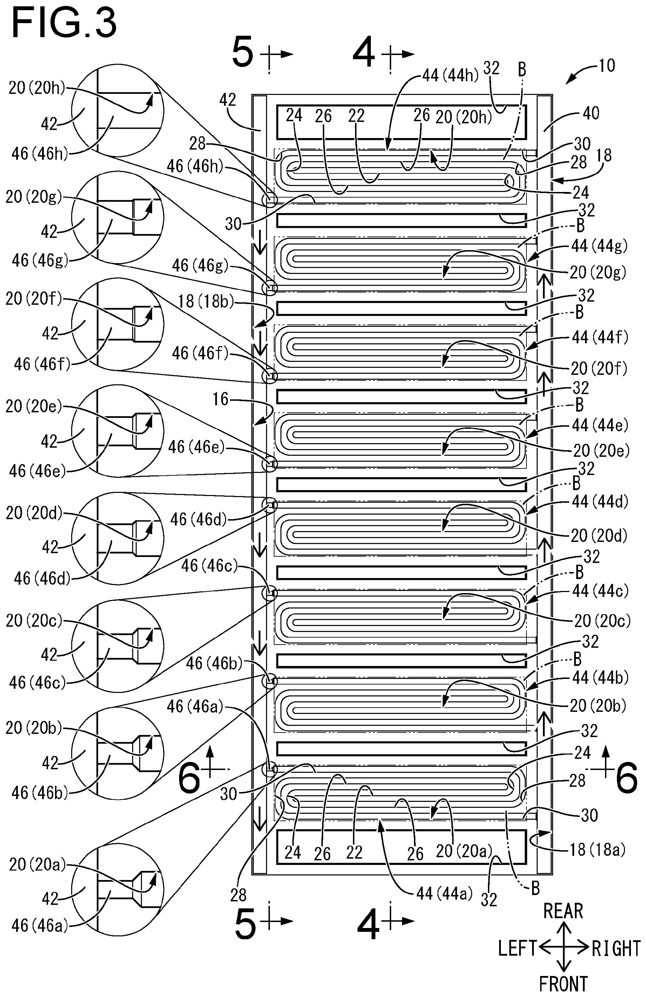

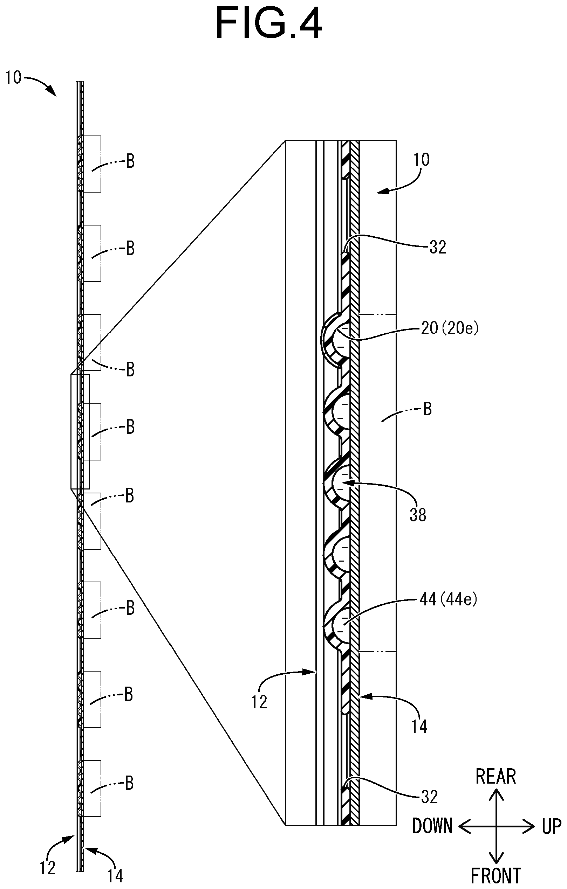

FIG. 1 depicts a cooling heat exchanger 10 according to a first practical embodiment of the present invention. The cooling heat exchanger 10 is to cool a battery pack B (described later) as a cooling target superposed on a surface thereof through heat exchange with a heat medium. As depicted in FIG. 2, the cooling heat exchanger 10 has a stacked structure where a resin plate 12 as a flow path member and a cooling plate 14 as a cooling surface constituent member are superposed on each other. In the following description, a front-rear direction refers to a vertical direction in FIG. 3 (referred to later), a left-right direction refers to a left-right direction in FIG. 3, and a vertical direction refers to a left-right direction in FIG. 4 (referred to later), which is a direction of superposing the resin plate 12 and the cooling plate 14.

As depicted in FIG. 2, the resin plate 12 has a rectangular plate shape as a whole and extends longer in the front-rear direction than in the left-right direction. The resin plate 12 is made of synthetic resin and is preferably made of a thermoplastic synthetic resin material. As a material forming the resin plate 12, polyamide, polyester, fluorine resin, or polyolefin is used favorably, for example. The resin plate 12 may be made of fiber-reinforced synthetic resin reinforced by glass fibers or carbon fibers, for example.

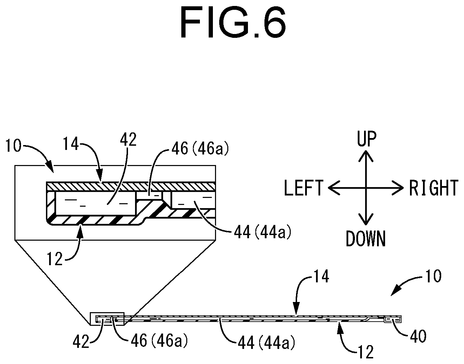

As depicted in FIGS. 3 to 6, the resin plate 12 includes a recessed groove 16 opened at an upper surface of the resin plate 12. The recessed groove 16 has a configuration including vertical groove parts 18a and 18b extending linearly in the front-rear direction at left and right ends, and a plurality of transverse groove parts 20 communicating the vertical groove parts 18a and 18b with each other. In FIG. 3 corresponding to a top view of the cooling heat exchanger 10, the upper surface of the resin plate 12 seen through the cooling plate 14 is depicted.

The transverse groove part 20 extends in a planar double helix pattern from a central area toward an outer periphery. More specifically, the transverse groove part 20 includes a first linear portion 22 extending linearly in the left-right direction from the center, U-shape first folded portions 24, 24 each extending from a right or left extension end of the first linear portion 22 toward one of the front and rear and folded at 180°, second linear portions 26, 26 linearly extending in the left-right direction from the first folded portions 24, 24, substantially U-shape second folded portions 28, 28 each extending from a right or left extension end of a corresponding one of the second linear portions 26, 26 toward the other one of the front and rear and folded at 180°, and third linear portions 30, 30 linearly extending in the left-right direction from the second folded portions 28, 28. The transverse groove part 20 is connected to the vertical groove part 18 at right or left extension end of each of the third linear portions 30, 30.

In the present practical embodiment, eight transverse groove parts 20a to 20h are arranged in parallel while separated from each other in the front-rear direction. The eight transverse groove parts 20a to 20h have shapes and sizes substantially equal to each other. Lightening holes 32 penetrating the resin plate 12 in the vertical direction are formed between the transverse groove parts 20, 20 at the resin plate 12 next to each other in the front-rear direction, and are formed external to and on the front and rear sides of the transverse groove parts 20a and 20h located at the front end and the rear end of the resin plate 12 respectively. The shape and size of the lightening hole 32 are not particularly limited. However, in the present practical embodiment, the lightening hole 32 has a substantially rectangular shape extending longer in the left-right direction than in the front-rear direction. In the present practical embodiment, the four transverse groove parts 20a to 20d on the front side and the four transverse groove parts 20e to 20h on the rear side have shapes reversed from each other between front and rear.

In the present practical embodiment, the resin plate 12 protrudes downward further in a part where the recessed groove 16 is formed than in the other part to ensure the depth of the recessed groove 16. Thus, the resin plate 12 protrudes downward at the left and right ends corresponding to parts where the vertical groove parts 18a and 18b are formed, and protrudes downward in a left-right intermediate part corresponding to a part where each transverse groove part 20 is formed.

The cooling plate 14 forms a cooling surface to be superposed on the battery pack B (described later). The cooling plate 14 of the present practical embodiment has a substantially rectangular plate shape. The cooling plate 14 is made of metal. The cooling plate 14 is desirably made of a metallic material having high heat conductivity, and is made of aluminum, copper, stainless steel, or an alloy thereof, for example.

As depicted in FIG. 2, a supply port 34 and a discharge port 36 are provided at front-side corners of the cooling plate 14. The supply port 34 has a substantially circular cylindrical shape protruding upward, and has a center hole penetrating the cooling plate 14 in the vertical direction. Likewise, the discharge port 36 has a substantially circular cylindrical shape protruding upward, and has a center hole penetrating the cooling plate 14 in the vertical direction. The supply port 34 and the discharge port 36 may be provided integrally with the cooling plate 14, or may be formed separately from the cooling plate 14 and fixed to the cooling plate 14 by means such as welding or adhesion, for example.

As depicted in FIGS. 2 and 4 to 6, the cooling plate 14 is superposed on the resin plate 12 from above. The resin plate 12 and the cooling plate 14 superposed on each other are fixed to each other by means such as adhesion using an adhesive agent, friction stir joining, or laser welding.

The recessed groove 16 opened at the upper surface of the resin plate 12 is covered in a light-tight manner by the cooling plate 14. The recessed groove 16 with the opening covered by the cooling plate 14 forms a cooling flow path 38. The cooling flow path 38 is formed between superposed surfaces of the resin plate 12 and the cooling plate 14. Thus, the cooling flow path 38 is formed inside the cooling heat exchanger 10. A part of a wall of the cooling flow path 38 (upper wall) is composed of the cooling plate 14. By configuring the cooling heat exchanger 10 as the stacked structure where the resin plate 12 and the cooling plate 14 are superposed on each other in this way, it becomes possible to easily form the cooling flow path 38 extending inside the cooling heat exchanger 10.

A part of the cooling flow path 38 composed of the right vertical groove part 18a functions as a supply flow path 40. A part of the cooling flow path 38 composed of the left vertical groove part 18b functions as a discharge flow path 42. The supply flow path 40 extends linearly in the front-rear direction at the right end of the cooling heat exchanger 10, and is connected to the supply port 34 at the front end. The discharge flow path 42 extends linearly in the front-rear direction at the left end of the cooling heat exchanger 10, and is connected to the discharge port 36 at the front end.

Parts of the cooling flow path 38 composed of the transverse groove parts 20a to 20h function as branch flow paths 44a to 44h respectively. As understood from the description relating to the transverse groove part 20, the branch flow path 44 extends in a planar double helix pattern, and two ends thereof located at the outer periphery are respectively connected to one and the other of the supply flow path 40 and the discharge flow path 42. The branch flow paths 44a to 44h branch at a plurality of positions of the supply flow path 40 in a flow path length direction and are provided in parallel to each other. At downstream-side ends of the branch flow paths 44a to 44h, the branch flow paths 44a to 44h join the discharge flow path 42 at a plurality of positions in the front-rear direction. In this way, the supply flow path 40 and the discharge flow path 42 are communicated with each other via the plurality of branch flow paths 44a to 44h.

Among the branch flow paths 44a to 44h, the branch flow path 44a located on the frontmost side is connected to the supply flow path 40 on the most upstream side and is connected to the discharge flow path 42 on the most downstream side. Among the branch flow paths 44a to 44h, the branch flow path 44h located on the rearmost side is connected to the supply flow path 40 on the most downstream side and is connected to the discharge flow path 42 on the most upstream side. Specifically, as each of the branch flow paths 44a to 44h is located on a more front side, this branch flow path 44 is connected to the supply flow path 40 on the upstream side and is connected to the discharge flow path 42 on the downstream side.

The heat medium having flowed in via the supply port 34 from an external flow path not depicted in the drawings flows in the supply flow path 40 from the front toward the rear, flows into the discharge flow path 42 via the branch flow paths 44a to 44h, and thereafter flows in the discharge flow path 42 from the rear toward the front to be discharged from the discharge port 36 into the external flow path. Directions of the flows of the heat medium in the supply flow path 40 and the discharge flow path 42 are indicated by arrows in FIG. 3. The external flow path not depicted in the drawings is connected to a pump for causing the heat medium to flow, a refrigerator for cooling the heat medium at high temperature to generate a low-temperature heat medium, and others.

In the present practical embodiment, after the heat medium is supplied via the supply port 34 provided at the front end corresponding to an upstream end of the supply flow path 40, the heat medium flows in the supply flow path 40 from the front toward the rear. After the heat medium flows in the discharge flow path 42 from the rear toward the front, the heat medium is discharged to the outside via the discharge port 36 provided at the front end corresponding to a downstream end of the discharge flow path 42. As the supply port 34 and the discharge port 36 connected to the external flow path are both provided at the front end in this way, it becomes possible to connect the external flow path easily and shorten a route of the external flow path.

As depicted in FIGS. 3 and 4, in the cooling heat exchanger 10 having the above configuration, the battery pack B is superposed as a cooling target on an upper surface of the cooling plate 14. In the present practical embodiment, one battery pack B is arranged on a part of the cooling plate 14 forming a wall of each of the branch flow paths 44a to 44h, so that eight battery packs B, B, ... B are aligned while being separated from each other in the front-rear direction. By the flow of the heat medium in the cooling flow path 38, heat is exchanged via the cooling plate 14 between the heat medium at low temperature and the battery pack B brought to high temperature by heat generation during use, thereby cooling the battery pack B.

The high-temperature heat medium increased in temperature by the heat exchange with the battery pack B is cooled by the refrigerator not depicted in the drawings connected to the external flow path. Then, the heat medium brought to low temperature by the refrigerator is supplied from the supply port 34 into the cooling flow path 38. The external flow path is simply required to be provided with a mechanism for reducing the temperature of the heat medium at high temperature, and may be provided with an air cooling unit such as a radiator or a liquid cooling unit instead of the refrigerator.

As the heat medium at low temperature is supplied from the external flow path into the supply flow path 40 and the heat medium at high temperature is discharged from the discharge flow path 42 into the external flow path, the heat medium flowing in the branch flow path 44 is likely to be brought to low temperature in a part near an end of connection to the supply flow path 40 and is likely to be brought to high temperature in a part near an end of connection to the discharge flow path 42. As the branch flow path 44 of the present practical embodiment extends in a planar double helix pattern, the part where the heat medium at low temperature flows and the part where the heat medium at high temperature flows are arranged alternately in a radial direction. Thus, in the branch flow path 44, heat exchange resulting from a temperature difference is facilitated between the part where the heat medium at low temperature flows and the part where the heat medium at high temperature flows that are arranged next to each other, thereby reducing a temperature difference between the parts. As a result, the battery pack B superposed on the wall of the branch flow path 44 is entirely cooled more uniformly.

The branch flow paths 44a to 44h are respectively provided with orifice flow path parts 46a to 46h as resistance regulating parts for regulating the flow rate of the heat medium. Each orifice flow path part 46 is provided partially at the corresponding branch flow path 44 in the flow path length direction. As depicted in FIG. 3, the orifice flow path part 46 is provided at an end of the branch flow path 44 on the downstream side (on the side of the discharge flow path 42).

The orifice flow path part 46 is regulated in flow resistance of the heat medium flowing inside the orifice flow path part 46. In the present practical embodiment, the flow resistance of the heat medium is regulated using a flow path sectional area. More specifically, in each of the orifice flow path parts 46a to 46g, a flow path sectional area is smaller than that in the other part of the branch flow path 44, thereby setting a flow resistance larger than that in the other part of the branch flow path 44. In the orifice flow path part 46h, a flow path sectional area is equal to that in the other part of the branch flow path 44, thereby regulating the flow resistance of the heat medium substantially equal to that in the other part of the branch flow path 44. In each of the orifice flow path parts 46a to 46g, both a flow path width dimension and a flow path depth dimension are smaller than those in the other part of the branch flow path 44. In the parts of the branch flow paths 44a to 44h other than the orifice flow path parts 46a to 46h, respective flow path width dimensions and flow path depth dimensions are substantially equal to each other. Thus, in the parts of the branch flow paths 44a to 44h other than the orifice flow path parts 46a to 46h, respective flow path sectional areas are substantially equal to each other.

The orifice flow path parts 46a to 46h are set to have flow resistances differing from each other. Specifically, a flow resistance in the orifice flow path part 46a is set larger than a flow resistance in the orifice flow path part 46b. The flow resistance in the orifice flow path part 46b is set larger than a flow resistance in the orifice flow path part 46c. The flow resistance in the orifice flow path part 46c is set larger than a flow resistance in the orifice flow path part 46d. The flow resistance in the orifice flow path part 46d is set larger than a flow resistance in the orifice flow path part 46e. The flow resistance in the orifice flow path part 46e is set larger than a flow resistance in the orifice flow path part 46f. The flow resistance in the orifice flow path part 46f is set larger than a flow resistance in the orifice flow path part 46g. The flow resistance in the orifice flow path part 46g is set larger than a flow resistance in the orifice flow path part 46h. In this way, the respective flow resistances of the heat medium in the orifice flow path parts 46a to 46h are set in such a way that the flow resistance becomes smaller in the orifice flow path part 46 provided at the branch flow path 44 branching on a more downstream side of the supply flow path 40.

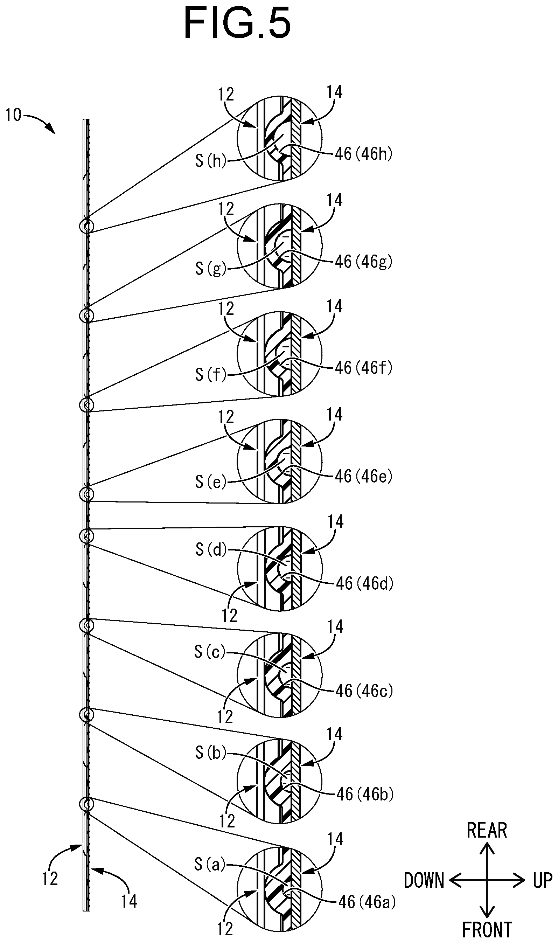

As depicted in FIG. 5, in the present practical embodiment, a flow path sectional area becomes larger in the orifice flow path part 46 provided at the branch flow path 44 branching on a more downstream side of the supply flow path 40. Specifically, the respective flow path sectional areas S(a) to S(h) of the orifice flow path parts 46a to 46h are set as follows: S(a) < S(b) < S(c) < S(d) < S(e) < S(f) < S(g) < S(h). The flow path sectional area S(h) is substantially equal to that in the part of the branch flow path 44 other than the orifice flow path part 46. Other things being equal, flow resistances in the orifice flow path parts 46a to 46h become lower in response to increase in a flow path sectional area. Thus, by setting the respective flow path sectional areas in the orifice flow path parts 46a to 46h in the way described above, the flow resistance becomes smaller in the orifice flow path part 46 provided at the branch flow path 44 branching on a more downstream side of the supply flow path 40. The orifice flow path parts 46a to 46h of the present practical embodiment are composed of walls having substantially semicircular sectional shapes, have substantially constant outer diameter dimensions in sections, and have flow path sectional areas differing from each other as a result of different wall thicknesses.

In the present practical embodiment, while the lengths of the orifice flow path parts 46a to 46h are substantially constant, they may be different from each other. As an example, by setting the lengths of the orifice flow path parts 46a to 46h in such a way that the length becomes shorter in the orifice flow path part 46 provided at the branch flow path 44 branching on a more downstream side of the supply flow path 40, tuning can be made using the length of the orifice flow path part 46 so as to reduce the flow resistance in the orifice flow path part 46 provided at the branch flow path 44 branching on the more downstream side of the supply flow path 40. As all the walls of the orifice flow path parts 46a to 46h are composed of the resin plate 12 and the cooling plate 14, frictional resistances acting between the wall surfaces of the orifice flow path parts 46a to 46h and the heat medium are substantially equal to each other.

The flow resistances in the orifice flow path parts 46a to 46h are set with consideration for a difference in pressure loss resulting from different branching positions of the branch flow paths 44a to 44h from the supply flow path 40, etc. Specifically, pressure loss becomes larger in a route along which the branch flow path 44 branches on a more downstream side of the supply flow path 40, so that a flow rate becomes lower under the same flow resistance. Then, by setting the flow resistance in the orifice flow path part 46 in such a way as to make the flow resistance lower in the branch flow path 44 branching on the more downstream side of the supply flow path 40, a difference in flow rate between the branch flow paths 44a to 44h is reduced. Preferably, the flow resistances in the orifice flow path parts 46a to 46h are regulated in such a way as to make the flow rates in the branch flow paths 44a to 44h substantially constant.

As described above, by reducing a difference in flow rate between the branch flow paths 44a to 44h, a difference in performance of cooling the cooling plate 14 becomes unlikely to occur between the branch flow paths 44a to 44h, thereby encouraging stabilization of cooling performance over a wider range of the cooling plate 14. This allows the battery pack B superposed on the wall forming part of each of the branch flow paths 44a to 44h at the cooling plate 14 to be cooled stably.

By providing the orifice flow path parts 46a to 46h partially at the branch flow paths 44, the flow path sectional area, eventually, the flow path width of the branch flow path 44 is ensured in the part other than the orifice flow path part 46. Thus, it is possible to achieve cooling performance effectively by ensuring a cooling area efficiently in the cooling plate 14 defined by the branch flow path 44, and is also possible to stabilize cooling performance over a wide range by regulating the flow rate in the branch flow path 44 using the orifice flow path part 46. In the present practical embodiment, the orifice flow path part 46 is provided at a position shifted from the battery pack B in a projection viewed in the vertical direction. Thus, the orifice flow path part 46 having a small flow path sectional area and a narrow flow path width is unlikely to influence cooling performance. Furthermore, arranging the orifice flow path part 46 at the downstream-side end of the branch flow path 44 prevents an unstable flow velocity distribution of the heat medium in the branch flow path 44 resulting from passage through the orifice flow path part 46, prevents a disturbed flow of the heat medium, and others. This facilitates control over the flow of the heat medium along the branch flow path 44 entirely, making it possible to expect stabilization of cooling performance. Moreover, in the present practical embodiment, as the branch flow paths 44a to 44h have substantially constant flow path width dimensions and have substantially constant flow path sectional areas, non-uniformity in cooling performance between the branch flow paths 44a to 44h is reduced more easily.

The flow resistances in the orifice flow path parts 46a to 46h are regulated using the size of a flow path sectional area. In particular, in the present practical embodiment, as the orifice flow path parts 46a to 46h have substantially constant flow path lengths and the orifice flow path parts 46a to 46h are composed of the same member, the flow resistances in the orifice flow path parts 46a to 46h are unlikely to be subjected to influence other than the flow path sectional areas thereof. This allows a magnitude relationship between the flow resistances in the orifice flow path parts 46a to 46h to be set easily using a difference in flow path sectional area between the orifice flow path parts 46a to 46h.

While the practical embodiment of the present invention has been described above in detail, the present invention is not limited by the specific statements of the practical embodiment. For example, the shapes of the supply flow path and the discharge flow path are not limited to those extending linearly. The supply flow path and the discharge flow path are not always required to extend in the front-rear direction and not always required to extend parallel to each other.

While the branch flow path desirably extends in a planar double helix pattern, it may extend linearly, may have a spiral pattern extending in a planar single helix pattern, or may extend in a curved or bent pattern such as a wave pattern or a meandering pattern (including a linear zigzag), for example. In the above practical embodiment, if the branch flow path extending in a planar helix pattern is employed, the branch flow path 44 is entirely formed into a quadrangular planar shape such as the one depicted in FIG. 3 in conformity with the quadrangular shape of the battery pack as a cooling target, thereby encouraging improvement in cooling efficiency. However, the outer shape of the branch flow path in a plan view having a double helix pattern is not particularly limited but may be a circular shape, for example.

While it is desirable for the plurality of branch flow paths to have shapes and sizes substantially equal to each other, at least one of the branch flow paths may have a shape and a size differing from those of the other branch flow path, for example.

The number of the branch flow paths is not particularly limited as long as it is two or more, and is designed appropriately in response to the size, shape and others of the cooling heat exchanger. Arrangement of the plurality of branch flow paths is also free from particular limitation.

The orifice flow path part 46 can be provided in the middle of the branch flow path 44 in the flow path length direction. However, the orifice flow path part 46 is desirably provided at an end of the branch flow path 44 as this can prevent influence over cooling performance to be exerted by a difference in a flow of the heat medium between an upstream side and a downstream side with respect to the orifice flow path part 46, change in a flow velocity in the part where the orifice flow path part 46 is formed, and others. If the orifice flow path part 46 is provided at the upstream end of the branch flow path 44, the heat medium in the branch flow path 44 is stirred on the downstream side with respect to the orifice flow path part 46, making it possible to expect improvement in cooling efficiency.

The flow resistance in the resistance regulating part is regulated on the basis of a flow path sectional area like in the case of the orifice flow path part 46 shown as an example in the above practical embodiment, and additionally, may be regulated, for example, by providing a flow path inner surface of the resistance regulating part with irregularities (including grained irregularities), a low-friction coating layer or the like. As an example, while flow path sectional areas or irregularities or the like on the flow path inner surfaces in the resistance regulating parts of the plurality of branch flow paths are different from those in the other parts of the branch flow paths, it is possible to generate a difference in flow resistance between the resistance regulating parts by making these flow path sectional areas or irregularities or the like substantially equal to each other and making a flow path length differing from each other between the resistance regulating parts. Moreover, the flow resistance in the resistance regulating part may be regulated by combining a plurality of elements to influence the flow resistance such as a flow path sectional area and irregularities on the flow path inner surface. Desirably, the flow resistance is increased in the resistance regulating part at least at the branch flow path branching on the most upstream side of the supply flow path by providing an orifice passage, for example, thereby applying a predetermined flow path resistance.

In the above practical embodiment, the resin plate 12 made of synthetic resin is shown as an example of the flow path member. However, the flow path member may be made of metal, and this facilitates thickness reduction of the cooling heat exchanger. Moreover, using synthetic resin for forming both the flow path member and the cooling surface constituent member makes it possible to encourage further weight reduction of the cooling heat exchanger. In this case, a material to be employed for forming at least the cooling surface constituent member is desirably heat-conductive synthetic resin prepared by mixing a heat-conductive filler such as metal powder of high heat conductivity or powder carbon with a synthetic resin material, for example.

The cooling heat exchanger may be provided with cooling surfaces that are defined on both surfaces thereof and to be superposed on cooling targets, for example, by forming recessed grooves at both surfaces of the flow path member and superposing the cooling plates on the corresponding both surfaces of the flow path member. In another case, one cooling heat exchanger may be provided with a plurality of cooling surfaces extending in directions intersecting each other. By using metal for forming the flow path member, for example, at least one cooling surface to be superposed on a cooling target can be composed of the flow path member.

The cooling heat exchanger 10 shown in the above practical embodiment has a stacked structure where the resin plate 12 and the cooling plate 14 are stacked on each other. However, the cooling heat exchanger is not limited to a stacked structure. In a structure applicable in the cooling heat exchanger, a pipe to form the cooling flow path is arranged on a member having a block or plate shape in such a way as to be exposed partially on a surface of the member, and the exposed part of the pipe forms the cooling surface, for example.

The cooling target is not limited to the battery pack B shown as an example in the above practical embodiment but may be a controller including a heat generator such as an electronic circuit, for example.

### KEYS TO SYMBOLS

- 10: cooling heat exchanger (first practical embodiment)
- 12: resin plate (flow path member)
- 14: cooling plate (cooling surface constituent member)
- 16: recessed groove
- 18: vertical groove part
- 18a: vertical groove part
- 18b: vertical groove part
- 20: transverse groove part
- 20a: transverse groove part
- 20b: transverse groove part
- 20c: transverse groove part
- 20d: transverse groove part
- 20e: transverse groove part
- 20f: transverse groove part
- 20g: transverse groove part
- 20h: transverse groove part
- 22: first linear portion
- 24: first folded portion
- 26: second linear portion
- 28: second folded portion
- 30: third linear portion
- 32: lightening hole
- 34: supply port
- 36: discharge port
- 38: cooling flow path
- 40: supply flow path
- 42: discharge flow path
- 44: branch flow path
- 44a: branch flow path
- 44b: branch flow path
- 44c: branch flow path
- 44d: branch flow path
- 44e: branch flow path
- 44f: branch flow path
- 44g: branch flow path
- 44h: branch flow path
- 46: orifice flow path part (resistance regulating part)
- 46a: orifice flow path part (resistance regulating part)
- 46b: orifice flow path part (resistance regulating part)
- 46c: orifice flow path part (resistance regulating part)
- 46d: orifice flow path part (resistance regulating part)
- 46e: orifice flow path part (resistance regulating part)
- 46f: orifice flow path part (resistance regulating part)
- 46g: orifice flow path part (resistance regulating part)
- 46h: orifice flow path part (resistance regulating part)
- B: battery pack

## Claims

1. A cooling heat exchanger comprising a cooling flow path formed inside, the cooling heat exchanger cooling a cooling target superposed on a surface of the cooling heat exchanger by causing a heat medium for cooling to flow in the cooling flow path, wherein
the cooling flow path comprises:
a supply flow path configured to allow the heat medium to be supplied from an upstream side;
a discharge flow path configured to allow the heat medium to be discharged from a downstream side; and
a plurality of branch flow paths connecting the supply flow path and the discharge flow path to each other, the plurality of branch flow paths branching from the supply flow path at a plurality of positions of the supply flow path in a flow path length direction while being provided in parallel,
the plurality of branch flow paths include respective resistance regulating parts provided partially for regulating respective flow resistances of the heat medium, and
the respective flow resistances of the heat medium in the resistance regulating parts are set in such a way that the flow resistance becomes smaller in the branch flow path branching on a more downstream side of the supply flow path.

2. The cooling heat exchanger according to claim 1, wherein at least one of the plurality of branch flow paths extends in a planar double helix pattern from a center toward an outer periphery, and two ends of the branch flow path located at the outer periphery are respectively connected to one and an other of the supply flow path and the discharge flow path.

3. The cooling heat exchanger according to claim 1 or 2, wherein respective parts of the plurality of branch flow paths other than the resistance regulating parts have flow path width dimensions equal to each other.

4. The cooling heat exchanger according to claim 3, wherein the respective parts of the plurality of branch flow paths other than the resistance regulating parts have flow path sectional areas equal to each other.

5. The cooling heat exchanger according to any one of claims 1-4, wherein respective flow path sectional areas in the resistance regulating parts are set in such a way that the flow path sectional area becomes larger in the resistance regulating part of the branch flow path branching on the more downstream side of the supply flow path.

6. The cooling heat exchanger according to any one of claims 1-5, wherein each resistance regulating part is provided at an end of the corresponding branch flow path.

7. The cooling heat exchanger according to any one of claims 1-6, further comprising:
a flow path member provided with a recessed groove formed at a surface of the flow path member; and
a cooling surface constituent member configured to be superposed on the cooling target, the flow path member and the cooling surface constituent member being superposed on each other, wherein
the recessed groove of the flow path member is covered by the cooling surface constituent member to form the cooling flow path between superposed surfaces of the flow path member and the cooling surface constituent member.

8. The cooling heat exchanger according to claim 7, wherein the flow path member is made of synthetic resin, and the cooling surface constituent member is made of metal.
